# EUROPÄISCHE PATENTSCHRIFT

(11) **EP 2 502 809 B1**
(45) Veröffentlichungstag und Bekanntmachung des Hinweises auf die Patenterteilung: **11.09.2013**
(21) Anmeldenummer: 12158748.9
(22) Anmeldetag: 09.03.2012
(51) Int. Cl.: B62D 61/12

(54) **Anhebevorrichtung für einen Achslenker sowie Achslenker**
Lifting device for an axle guide and axle guide
Dispositif de levage pour un guide d'essieu et guide d'essieu

(30) Priorität: 21.03.2011 DE 102011001437
(43) Veröffentlichungstag der Anmeldung: 26.09.2012
(73) Patentinhaber: BPW Bergische Achsen KG, 51674 Wiehl (DE)
(72) Erfinder: Gmeiner, Swen, 51709 Marienheide (DE); Michels, Manfred, 51067 Köln (DE); Schwarz, Michael, 51469 Bergisch Gladbach (DE); Luckau, Bianca, 53797 Lohmar (DE); Neumann, Arthur, 51597 Morsbach (DE)
(74) Vertreter: Christophersen & Partner

(56) Entgegenhaltungen:
- EP-A2- 1 842 700
- EP-A2- 1 902 933
- DE-A1-102006 015 671

## Beschreibung

Die Erfindung betrifft eine Anhebevorrichtung für einen eine Fahrzeugachse tragenden Achslenker, mit einem fahrzeugfest angeordneten Kraftglied, einer durch Betätigung des Kraftglieds in Richtung zu dem Achslenker beweglichen, ein- oder mehrteiligen Druckübertragung, sowie einem in Verlängerung der Wirkrichtung von Kraftglied und Druckübertragung an dem Achslenker angeordneten Druckaufnahme, gegen die die Druckübertragung nur bei Betätigung des Kraftglieds zur Anlage kommt, wobei die Druckaufnahme an einer an dem Achslenker befestigbaren Konsole ausgebildet ist:

Die Erfindung betrifft ferner einen Achslenker für eine bei Nichtgebrauch mittels eines Achslifts anhebbare Fahrzeugachse, wobei Beständteil des Achslifts achslenkerseitig eine Druckaufnahme zur Anlage eines Kraftglieds des Achslifts ist, wobei an dem Achslenker Befestigungsmittel zur Befestigung einer die Druckaufnahme aufweisenden Konsole ausgebildet sind.

Eine derartige Anhebevorrichtung sowie ein derartiger Achslenker sind aus der EP 1 902 933 A2 bekannt.

Aus der US 4,773,670 ist eine Vorrichtung zum Anheben einer Fahrzeugachse unter Verwendung einer Luftfeder als Kraftglied bekannt. Dessen unteres Ende ist fahrzeugfest, wohingegen sich das obere Ende gegen eine Konsole abstützt, die an der Unterseite des die Achse führenden Längslenkers fest angeschweißt ist. Über Bolzen ist die Luftfeder dauernd mit der Konsole verbunden, wodurch die Luftfeder und damit das Kraftglied der Anhebevorrichtung im Fahrbetrieb jede Einfederung des Fahrwerks unmittelbar mitmacht. Dies führt auf Dauer zu einer hohen mechanischen Beanspruchung der Anhebevorrichtung und deren Einzelteilen.

Im Stand der Technik sind auch bereits Anhebevorrichtungen bzw. Achslifte bekannt, deren Kraftglied nicht in dauernder Verbindung mit dem Achslenker steht. Derartige Vorrichtungen sind zum Beispiel aus der DE 203 17 350 U1, der DE 10 2006 015 671 A1 und der DE 10 2006 015 672 A1 bekannt. Diese Achslifte bestehen aus zwei mechanisch getrennten Hauptbestandteilen, nämlich erstens einem als Membranzylinder gestalteten, unter der Stütze der Achsaufhängung befestigten Kraftg lied mit einer stempelartigen Druckübertragung, und zweitens einer an dem Achslenker angeordneten, ein Widerlager bildenden Druckaufnahme, gegen die also die Druckübertragung nur bei der Betätigung des Kraftgliedes zur Anlage kommt. Diese Druckaufnahme am Achslenker besteht bei dem Achslift nach der DE 203 17 350 U1 in einer Vertiefung in Gestalt einer Kalotte an der Unterseite des Achslenkers. Hingegen bestehen die Druckaufnahmen bei den Achsliften nach der DE 10 2006 015 671 A1 und der DE 102006 015 672 A1 in einer an der Unterseite des Achslenkers nach unten vorstehenden Kontur, welche gemäß der DE 10 2006 015 671 A1 im Gussmaterial des Achslenkers, und gemäß der DE 10 2006 015 672 A1 an Schalen, aus denen der Achslenker besteht, mit angeformt ist.

Bei Nutzfahrzeugen, bei denen solche Anhebevorrichtungen in erster Linie Anwendung finden, erfordern unterschiedliche Fahrzeugtypen auch unterschiedliche Fahrhöhen. Unter der Fahrhöhe versteht der Fachmann den vertikalen Abstand zwischen der Unterseite des Fahrzeuglängsträgers, und dem Mittelpunkt der Achse. In den Programmen der Achshersteller werden gleiche Achslenker häufig mit unterschiedlich hohen Stützen, Luftfederbälgen oder unterschiedlich verkröpften Luftfederkonsolen kombiniert. Dadurch kann der Schwenkbereich, also der minimale und der maximale Winkel des Lenkers in Bezug auf die Stütze, einmal geringer, und ein anderes Mal größer ausfallen. Aufgrund dieser Gegebenheiten und für einen möglichst breiten Einsatzbereich muss die Anhebevorrichtung in ihren für die Funktion maßgeblichen Maßen bzw. Geometrien anpassbar sein.

Der Erfindung liegt daher die Aufgabe zugrunde, eine einfache Anpassung der für die ordnungsgemäße Funktion der Anhebevorrichtung notwendigen Maße bzw. Geometrien unter Beibehaltung der Bauart des Achslenkers vornehmen zu können.

Zur Lösung dieser Aufgabe wird eine Anhebevorrichtung mit den Merkmalen des Patentanspruchs 1, und ein Achslenker mit den Merkmalen des Patentanspruchs 8 vorgeschlagen.

Erfindungsgemäß befindet sich die achslenkerseitige Druckaufnahme, auf die bei der Betätigung des Achslifts die Hebekräfte einwirken, an einem getrennten Element, nämlich an einer an dem Achslenker befestigbaren Konsole. Mit wenigen Handgriffen lässt sich die Konsole am Achslenker befestigen, wobei im Betrieb die Anhebekräfte sicher übertragen werden.

Die Befestigung der Konsole setzt sich zusammen aus mindestens einer Steck- oder Hakenverbindung und mindestens einer hiervon beabstandeten weiteren Verbindung, wobei die weitere Verbindung vorzugsweise eine Schraub-, Bolzen oder Rastverbindung ist. Die Verbindung erfolgt daher in zwei Bereichen, die im Abstand zueinander angeordnet sind. Als erstes Verbindungsmittel dient die an der Konsole und/oder an dem Achslenker ausgebildete Steck- oder Hakenverbindung. Das weitere, hierzu in Richtung der Längserstreckung des Achslenkers beabstandete Verbindungsmittel ist die z.B. Schraub-, Bolzen oder Rastverbindung.

Bei den nachfolgend näher beschriebenen Ausführungsbeispielen befindet sich die Steck- oder Hakenverbindung in Fahrtrichtung weiter vorne, hingegen die weitere Verbindung in Fahrtrichtung weiter hinten. Alternativ kann die weitere Verbindung in Fahrtrichtung weiter vorne, und die Steck- oder Hakenverbindung in Fahrtrichtung weiter hinten angeordnet sein.

Zur Befestigung der Konsole wird zunächst die Steck- oder Hakenverbindung in Eingriff gebracht, wofür lediglich eine z. B. horizontale Bewegung der Konsole bis zu einem Eingriff oder Formschluss erforderlich ist. Weitere Handgriffe, also z. B. ein Verschrauben, sind in Bezug auf diese erste Verbindung nicht erforderlich.

Mit einer Ausgestaltung wird vorgeschlagen, dass an dem Achslenker die Konsole in mindestens zwei unterschiedlichen Positionen befestigbar ist. Weitere vorteilhafte Ausgestaltungen sind in den jeweiligen Unteransprüchen angegeben. Einzelheiten und Vorteile der Erfindung ergeben sich auch aus der nachfolgenden Beschreibung von Ausführungsbeispielen anhand der Zeichnungen. Darin zeigen:
- Figur 1: in einer perspektivischen, überwiegend seitlichen Darstellung Teile einer luftgefederten Achsaufhängung einschließlich der Anhebevorrichtung für den schwenkbar in einer Stütze gelagerten Achslenker, jedoch ohne Darstellung der Fahrzeugachse selbst;
- Fig. 2a: in einer Schnittdarstellung eine an dem Achslenker zu befestigende Konsole, welche Bestandteil des Achslifts bzw. der Anhebevorrichtung ist;
- Fig. 2b: die Gegenstände nach Fig. 2a nach Abschluss der Befestigung der Konsole an dem Achslenker;
- Fig. 3: eine zweite Ausführungsform eines Achslenkers mit einer daran befestigten, verstellbaren Konsole;
- Fig. 4: eine der vorigen Ausführungsform ähnliche, dritte Ausführungsform eines Achslenkers mit verstellbarer Konsole;
- Fig. 5: eine vierte Ausführungsform eines Achslenkers mit einer daran befestigten, verstellbaren Konsole, und
- Fig. 6: eine fünfte Ausführungsform eines Achslenkers mit einer daran befestigten, verstellbaren Konsole.

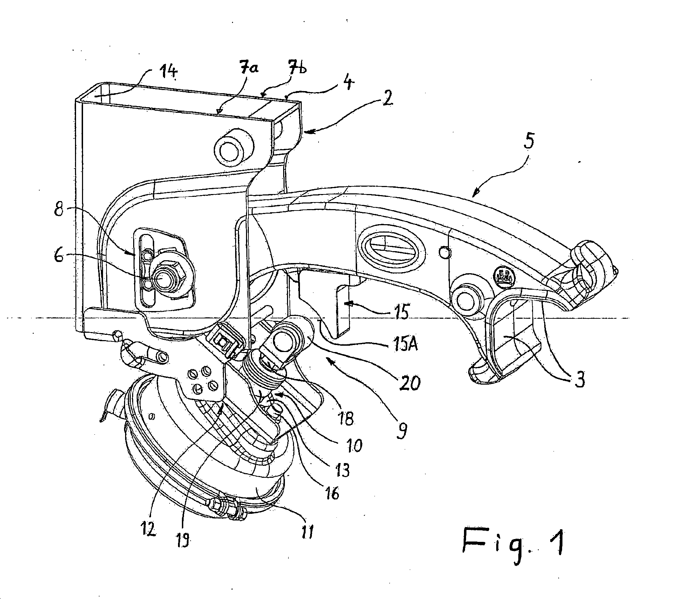

Die Fig. 1 zeigt die Achsaufhängung eines Lkw-Anhängers oder -Aufliegers. Unter dem Fahrzeugrahmen sind links und rechts jeweils Stützen 2 befestigt, z. B. durch Verschweißen ihres oberen Randes 4 mit der Unterseite der Längsträger des Fahrzeugrahmens. In jeder Stütze 2 ist, schwenkbar um jeweils einen Bolzen 6, ein Achslenker bzw. Längslenker 5 für die Fahrzeugachse schwenkbar gelagert.

Der Achslenker bzw. Längslenker 5 ist als Gießteil aus Stahlguss oder Leichtmetallguss ausgebildet. Sein vorderes Ende ist als Auge 5A gestaltet, in dem eine Gummibuchse oder eine Gummi-Stahl-Buchse sitzt. Durch diese sowie durch die Seitenwände 7a, 7b der Stütze 2 hindurch erstreckt sich der Bolzen 6. An seinem rückwärtigen Ende ist jeder der beiden Achslenker 5, was die Zeichnung nicht zeigt, mit einer Befestigungsfläche für einen Luftfederbalg einer Luftfederung versehen.

An jedem Achslenker 5 ist eine Achsaufnahme 3 ausgebildet, über die der Achslenker 5 mit dem Achskörper der Fahrzeugachse verbunden ist. Der Achskörper, vorzugsweise ein Achsrohr, ist von der linken bis zur rechten Fahrzeugseite durchgehend gestaltet und trägt an seinen beiden Enden die Radlagerungen der Fahrzeugräder.

Zum Einstellen des Vorlaufs der Fahrzeugachse sind die Stützen 2 hier mit Justiervorrichtungen 8 versehen. Die Stütze 2 ist im Querschnitt U-förmig gestaltet und setzt sich aus den beiden zueinander im Wesentlichen parallelen Seitenwänden 7a, 7b und einer nach vorne in Fahrtrichtung weisenden Stirnwand 14 zusammen. Nach hinten und nach unten hin ist die Stütze 2 offen. Die Seitenwände 7a, 7b der Stütze sind mit Löchern versehen. Durch diese Löcher sowie durch das vordere Auge 5A des Achslenkers 5 führt der Bolzen 6 hindurch, und bildet so die Schwenkachse für den Achslenker 5.

Über eine Anhebevorrichtung 9, im folgenden auch kurz als Achslift bezeichnet, lässt sich die in Fig. 1 in der Fahrstellung dargestellte Fahrzeugachse, falls sie für den Fahrbetrieb nicht gebraucht wird, in eine angehobene Stellung heben. Wichtiger Bestandteil der Anhebevorrichtung 9 ist ein mit Druckluft betriebener Membranzylinder 11, der mittels einer Konsole 12 starr an der Stütze 2 angeordnet ist. Die Konsole 12 ist mit einer Abstützung 10 zur Befestigung des Membranzylinders 11 versehen. Bestandteile der Abstützung 10 sind zu beiden Seiten einer Öffnung 13 an der Konsole angeordnete Schrauben 16, die den Membranzylinder starr an der Konsole 12 befestigen.

Als Widerlager zur Aufnahme des Hebedrucks bzw. der Hebekraft ist der Achslenker 5 an seiner Unterseite mit einem Kraftaufnahmeglied versehen, an dem als Druckaufnahme 15A eine Abrollfläche ausgebildet ist. Als Kraftaufnahmeglied dient eine Konsole 15, die Bestandteil des Achslifts 9 ist und im Folgenden noch näher erläutert wird.

Der Membranzylinder 11 ist das Kraftglied des Achslifts 9. Sein Gehäuse ist mit Hilfe der Verschraubungen 16 starr an der Konsole 12 abstützt. Hierbei ragt ein Teil des Membranzylinders 11 durch die Öffnung 13 in der Konsole 12 nach schräg oben. In diesem Bereich befindet sich eine Axialführung 19 für eine aus dem Membranzylinder 11 heraus führende, durch das Druckmittel im Membranzylinder angetriebene Kolbenstange 18. Bei der Axialführung 19 handelt es sich um eine Kunststoffbuchse, welche die Kolbenstange 18 auf einem gewissen Teil ihrer Länge axial führt. An ihrem Ende ist die Kolbenstange 18 mit einer wälzgelagerten Rolle 20 versehen.

Bei Betätigung des Kraftglieds 11 mittels Druckluft kommt es durch die gemeinsam eine Druckübertragung bildende Einheit aus Kolbenstange 18 und Rolle 20 zu einer nach schräg oben gerichteten Bewegung in Richtung der gegenüberliegend an dem Achslenker 5 befestigten Konsole 15, bis die Rolle 20 an der Druckaufnahme 15A zur Anlage kommt. Bei weiterem Druck wird der Achslenker 5 um den Bolzen 6 nach oben geschwenkt, und die Achse angehoben.

Außerhalb des Achsliftbetriebs ist die aus Kolbenstange und Rolle zusammengesetzte Druckübertragung 18, 20 in Richtung zum Membranzylinder 11 zurückgezogen, wodurch die Rolle 20 in keinerlei Kontakt zu der Druckaufnahme 15A an der Konsole 15 steht. Der Achslenker 5 kann sich also frei entsprechend den Fahrbedingungen bewegen.

Die als Abrollfläche 15A dienende Randkontur der Konsole 15 ist die einer zu der Rolle 20 hin konkav gekrümmten Evolvente. Die Evolvente ist dergestalt, dass die Flächennormale jenes Ortes, an dem die Rolle 20 an der Abrollfläche 15A anliegt, exakt mit der Längsachse der Kolbenstange 18 zusammenfällt. Durch diese Ausrichtung und geometrische Gestaltung der beteiligten Bauteile wird erreicht, dass keine oder allenfalls sehr geringe Querkräfte auf die Rolle 20 und damit auf die Kolbenstange 18 ausgeübt werden. Gleichwohl kann es sinnvoll sein, die Kolbenstange 18 axial zu führen, wozu nahe dem Austritt der Kolbenstange 18 aus dem Gehäuse des Membranzylinders 11 die Axialführung 19 an dem Gehäuse des Membranzylinders 11 befestigt ist. Alternativ kann die achslenkerseitige Druckaufnahme 15A auch als korrespondierende Kalotte in Verbindung mit einer dann schwenkbaren Kolbenstange 18 ausgebildet sein, oder mit jeder anderen geeigneten geometrischen Paarung.

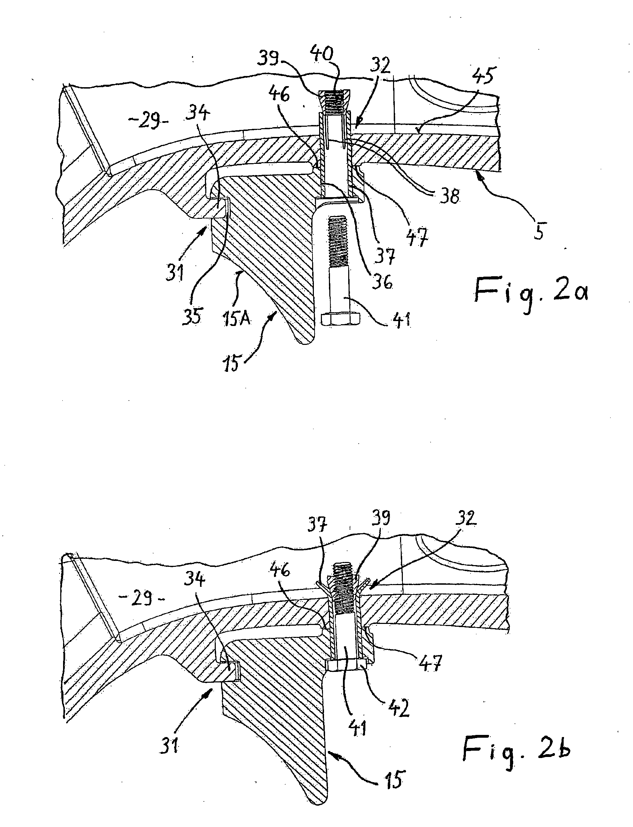

Die Figuren 2A und 2B zeigen in zwei verschiedenen Stadien das Anbringen der Konsole 15 unten an dem Achslenker 5. Die Befestigungsmittel teilen sich auf zwei Verbindungen auf, und zwar auf eine Steck- oder Hakenverbindung 31 sowie auf eine hiervon getrennte weitere Verbindung 32, die hier als Schraubverbindung gestaltet ist, aber ebenso eine Bolzenverbindung oder eine Rastverbindung sein kann.

Bei der ersten Ausführungsform nach den Figuren 1, 2a und 2b ist das achslenkerseitige Element der Steck- oder Hakenverbindung 31 ein einstückig an dem Achslenker 5 angeformter Haken 34 mit einem zu der weiteren Verbindung 32 hin weisenden Hakenende. Der Haken 34 greift in eine korrespondierende Öffnung 35 in der Konsole 15 formschlüssig ein. Dabei sind Haken 34 und Öffnung 35 so angeordnet, dass sie durch eine von der weiteren Verbindung 32 weg gerichtete Bewegung der Konsole 15 in Eingriff gelangen und dann arretiert wird. Diese Bewegung erfolgt längs der Längserstreckung des Achslenkers, weshalb die Konsole 15 durch eine im Wesentlichen horizontale, reine Steckbewegung in Formschluss mit dem Achslenker 5 gebracht wird.

Die Sicherung der so vorläufig erzielten Arretierung erfolgt anschließende durch die weitere Verbindung 32. Hierzu wird, nachdem die Konsole 15 an der Steck- und Hakenverbindung 31 vorläufig befestigt ist, zunächst eine Zentrierhülse 37 in zueinander fluchtende Bohrungen 36 des Achslenkers 5 und der Konsole 15 eingesetzt. Die Zentrierhülse 37 ist von solcher Länge, dass sich ihr achslenkerseitiges Ende über die Bohrung 36 hinaus bis in einen Hohlraum 29 des innen hohl gestalteten Achslenkers 5 hinein erstreckt. An diesem Ende ist die Zentrierhülse 37 mit Längsschlitzen 38 versehen. Ebenfalls auf diesem achslenkerseitigen Ende der Zentrierhülse 37 sitzt eine Spreizmutter 39 auf. Diese weist außen einen in die Zentrierhülse 37 eingreifenden Konus auf, und ist innen mit einem Gewinde 40 für den Eingriff des Gewindeabschnitts einer Schraube 41 versehen.

Die Fig. 2b zeigt dieselben Gegenstände nach dem Einschrauben und Anziehen der Schraube 41. Deren Schraubenkopf 42 stützt sich in einer die Bohrung 36 der Konsole 15 umgebenden Einsenkung ab. Durch Anziehen der Schraube 41 wird die mit dem Innengewinde 40 versehene Spreizmutter 39 axial gegen die Zentrierhülse 37 gezogen, wobei diese im Bereich der Längsschlitze 38 aufweitet, und sich gegen die Wandung 45 des Hohlraums 29 legt. Es kommt daher nicht nur zu einer Verschraubung der Konsole 15 mit der Innenwandung 45 des Achslenkers 5, sondern, aufgrund der Verspreizung der Hülse 37, zu einer zusätzlichen Sicherung gegen Lösen der Verbindung 32. Mit dieser Art Befestigung kann auf ein Gewinde im Achslenker, welches bei der Herstellung des Achslenkers einen zusätzlichen Fertigungsschritt erfordern würde, oder auf eine zu fügende Mutter verzichtet werden.

Um die zueinander fluchtenden Bohrungen 36 herum sind der Achslenker 5 und die Konsole 15 jeweils mit Ringflächen 47, 46 versehen, die plan gegeneinander anliegen. An dieser Kontaktfläche wird der Großteil der Hebekräfte von der Konsole 15 auf den Achslenker 5 übertragen.

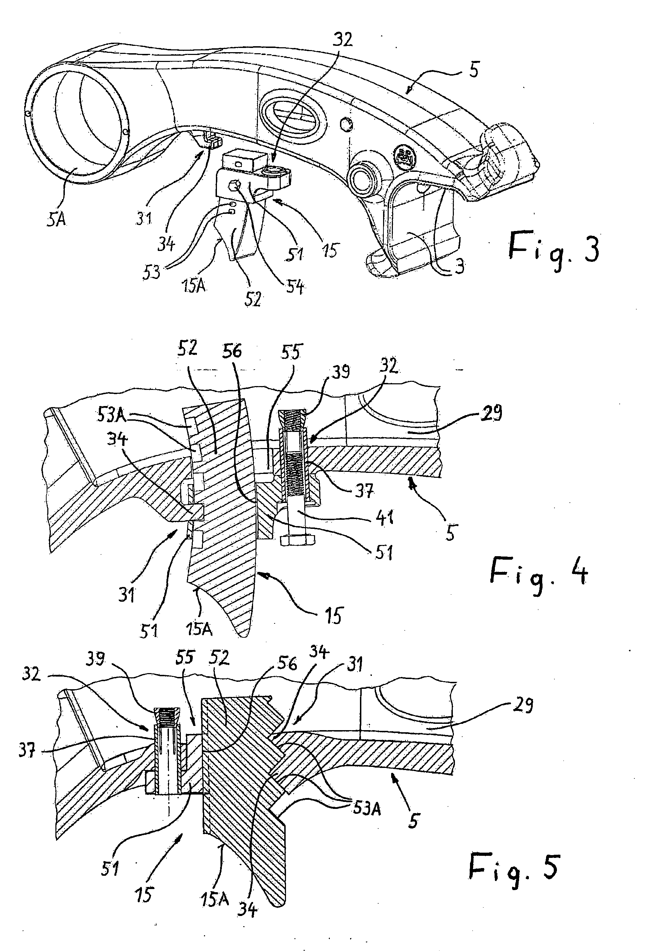

Bei der zweiten Ausführungsform nach Fig. 3, der dritten Ausführungsform nach Fig. 4 und der vierten Ausführungsform nach Fig. 5 ist die Konsole 15 zweiteilig, um so die Druckaufnahme 15A in mehreren unterschiedlichen Positionen an ein- und demselben Achslenker 5 anordnen zu können. Zu diesem Zweck besteht die Konsole 15 aus einem Verstellelement 52, welches die Abrollfläche 15A aufweist, und welches in einem weiteren Konsolenelement 51 geführt und daran abgestützt ist bzw., bei Fig. 5, an dem weiteren Konsolenelement 51 nur abgestützt ist. Wegen der Länge des Verstellelements 52 kann dieses, wie in Fig. 4 und Fig. 5 gezeigt, mit seinem oberen Ende bis in den Hohlraum 29 des Achslenkers 5 eintauchen, der zu diesem Zweck eine entsprechend große Öffnung 55 oder eine Ausnehmung aufweist.

Das Verstellelement 52 ist bei den Ausführungsformen nach Fig. 3 und Fig. 4 bogenförmig gestaltet. Ebenso wie bei der ersten Ausführungsform nach den Fign. 1, 2a und 2b ist der Achslenker 5 zwecks starrer Befestigung der Konsole 15 mit zwei getrennt am Achslenker angeordneten Befestigungsmitteln 31, 32 versehen.

Bei der Ausführungsform nach Fig. 3 ist das Verstellelement 52 zur Einstellung der wirksamen Länge der Konsole 15 mit einer Mehrzahl von Querbohrungen 53 versehen, und ein Bolzen 54 ist durch wahlweise eine dieser Querbohrungen 53 und zugleich durch das weitere Konsolenelement 51 der Konsole hindurchgesteckt. Das Einstellen der Konsole kann nachträglich bzw. individuell durch den Fahrzeugbauer erfolgen, nachdem zunächst das Konsolenelement 51 in seiner nicht veränderbaren Stellung an dem Achslenker 5 montiert wurde. Alternativ besteht die Möglichkeit, schon vor der Anbringung die beiden Teile 51, 52 in einer bestimmten Relativstellung zu verbinden, die für den jeweiligen Fahrwerkstyp passend ist. Die so vorbereitete Konsole 15 aus den beiden Konsolenelementen 51, 52 wird dann als Einheit am Achslenker 5 angebracht, ohne dass es noch zu einer versehentlichen Fehlmontage kommen kann.

Bei der Variante nach Fig. 4 ist das Verstellelement 52 der Konsole mit einer Mehrzahl gleichartiger Arretierstrukturen 53A, hier in Form von Ausnehmungen, versehen. In eine und nur eine dieser Strukturen 53A greift der am Achslenker angeformte Haken 34 der Steck- bzw. Hakenverbindung 31 ein, und bestimmt dadurch die Einstellung des Verstellelements 52 und die gewünschte wirksame Konsolenlänge. Das Konsolenelement 51, welches durch die weitere Verbindung 32 mit dem Achslenker verbunden ist, weist eine Stützfläche 56 auf. Gegen diese stützt sich das Verstellelement 52 mit seiner den Arretierstrukturen 53A abgewandten Seite ab. Die einmal gewählte Einstellung wäre, da das Verstellelement 52 kein horizontales Spiel zu seiner Führung am weiteren Konsolenelement 51 hat, zugunsten einer anderen Einstellung nur änderbar, wenn hierfür die zweite Verbindung 32 gelöst würde. Diese Variante ist also dann von Vorteil, wenn die endgültige Einstellung bereits mit dem Anbringen der Konsole 15 erzielt werden soll. Für die individuell richtige Vorabeinstellung kann das Verstellelement 52 außen mit einer entsprechenden Montagemarkierung versehen sein, oder die beiden Konsolenelemente 51, 52 werden zur vorläufigen Positionierung durch einen Metallkleber verbunden.

Bei der Variante nach Fig. 5 ist zur Herstellung der ersten, steckbaren Verbindung 31 das Verstellelement 52 der Konsole an seiner nach hinten, d. h. dem Bolzen 6 (Figur 1) abgewandten Seite mit einer Mehrzahl gleichartiger Arretierstrukturen 53A versehen. Diese Strukturen weisen die Form einer Zahnung auf, deren Zähne in Eingriff mit korrespondierenden Zähnen stehen, die unmittelbar an der Öffnung 55 des Achslenkers 5 angeformt sind. Auf diese Weise kommt es zu einer Steckverbindung 31 an den korrespondierend gestalteten Zähnen. Je nachdem, welche der Arretierstrukturen 53A in die korrespondierenden Strukturen des Achslenkers 5 eingreifen, bestimmt sich die Einstellung des Verstellelements 55 und damit die wirksame Konsolenlänge.

Das Konsolenelement 51, welches durch die weitere Verbindung 32 am Achslenker befestigt ist, ist als L-förmiger Winkel gestaltet. Dessen einer Schenkel erstreckt sich in die Öffnung 55 und weist eine Stützfläche 56 auf, gegen die sich das Verstellelement 52 mit seiner vorderen, dem Bolzen 6 (Fig. 1) zugewandten Seite abstützt. Der andere Schenkel liegt von unten gegen den Achslenker an und nimmt die weitere Verbindung 32 auf. Diese befindet sich daher in Fahrtrichtung vor dem Verstellelement 52 mit der daran ausgebildeten Druckaufnahme 15A.

Die Anordnungen gemäß Figuren 1 bis 5 zeichnen sich dadurch aus, dass die Konsole 15 sich ausschließlich von unten her gegen den Achslenker 5 anlegt. Die vom Membranzylinder 11 eingebrachten Kräfte lassen sich so auf direktem Weg von unten her in den Achslenker 5 einleiten. Die Konsole 15 benötigt lediglich geringen Bauraum und ist schmaler als der Achslenker 5.

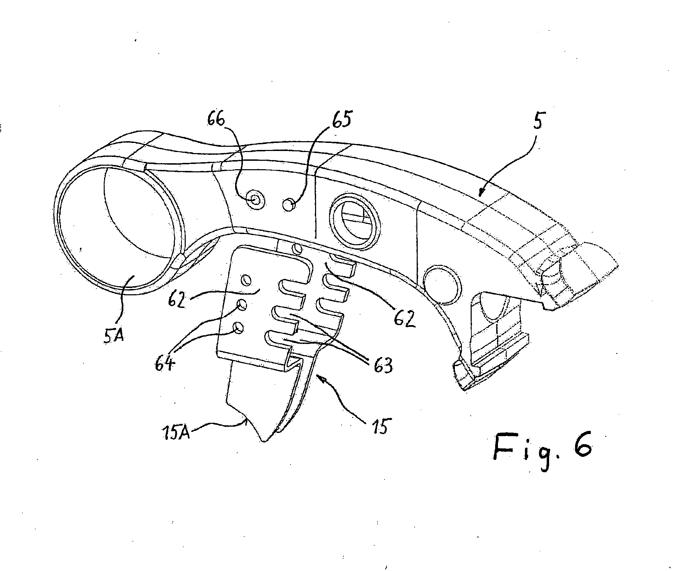

Bei der Ausführungsform nach Fig. 6 weist die hier einteilige Konsole 15 zu beiden Seiten des Achslenkers 5 jeweils einem Schenkel 62 auf. Dieser weist paarweise ausgebildete Strukturen auf, die eine Montage der Konsole 15 in unterschiedlichen Höhen an dem Achslenker zulassen, hier in drei unterschiedlichen Höhen. Diese Strukturen bestehen aus einseitig offenen Schlitzen 63 sowie aus in derselben Höhe angeordneten Bohrungen 64 jeweils in beiden Schenkeln 62. Diese Elemente 63, 64 sind wahlweise mit entsprechenden, seitlich am Achslenker angeformten Zapfen 65 bzw. über einen Bolzen mit einer Querbohrung 66 des Achslenkers 5 verbindbar. Auf diese Weise lässt sich die Höhenposition der Abrollfläche 15A so einstellen, dass sich beim Betrieb des Achslifts eine Fluchtung zu der aus Kolbenstange 18 und Rolle 20 bestehenden Druckübertragung einstellt. Die Druckaufnahme 15A ist also immer optimal in Verlängerung zu der Wirkrichtung des Kraftglieds 11 angeordnet.

Bei der Ausführungsform nach Fig. 6 wird die Steck- bzw. Hakenverbindung 31 durch den jeweiligen einseitig offenen Schlitz 63 in Verbindung mit dem Zapfen 65, und die weitere Verbindung 32 durch die jeweilige Bohrung 64 in Verbindung mit der Querbohrung 66 des Achslenkers 5 sowie einen Querbolzen gebildet.

Die Anpassung des Bewegungswegs des Achslifts an die jeweilige Fahrwerksgeometrie kann auch, oder zusätzlich, auf Seiten der Stütze 2 erfolgen, indem zum Beispiel die Konsole 12 relativ zu der Stütze 2 in verschiedenen Stellungen positionierbar ist.

### Bezugszeichenliste

- 2: Stütze
- 3: Achsaufnahme
- 4: Rand
- 5: Achslenker (Längslenker)
- 5A: Auge
- 6: Bolzen
- 7a: Seitenwand
- 7b: Seitenwand
- 8: Justiervorrichtung
- 9: Anhebevorrichtung (Achslift)
- 10: Abstützung
- 11: Kraftglied, Membranzylinder
- 12: Konsole
- 13: Öffnung
- 14: Stirnwand
- 15: Konsole
- 15A: Druckaufnahme, Abrollfläche
- 16: Schraube
- 18: Kolbenstange
- 19: Axialführung der Kolbenstange
- 20: Rolle
- 29: Hohlraum
- 31: Steck- oder Hakenverbindung, erste Verbindung
- 32: weitere Verbindung
- 34: Haken
- 35: Öffnung
- 36: Bohrung
- 37: Zentrierhülse
- 38: Längsschlitz
- 39: Spreizmutter
- 40: Gewinde
- 41: Schraube
- 42: Schraubenkopf
- 45: Innenwandung
- 46: Ringfläche
- 47: Ringfläche
- 51: Konsolenelement
- 52: Verstellelement
- 53: Querbohrung
- 53A: Arretierstruktur
- 54: Bolzen
- 55: Öffnung
- 56: Stützfläche
- 62: Schenkel
- 63: Schlitz
- 64: Bohrung
- 65: Zapfen
- 66: Querbohrung

## Patentansprüche

1. Anhebevorrichtung für einen eine Fahrzeugachse tragenden Achslenker, mit einem fahrzeugfest angeordneten Kraftglied (11), einer durch Betätigung des Kraftglieds (11) in Richtung zu dem Achslenker beweglichen, ein- oder mehrteiligen Druckübertragung (18, 20), sowie einer in Verlängerung der Wirkrichtung von Kraftglied (11) und Druckübertragung (18, 20) an dem Achslenker angeordneten Druckaufnahme (15A), gegen die die Druckübertragung (18, 20) nur bei Betätigung des Kraftglieds (11) zur Anlage kommt, wobei die Druckaufnahme (15A) an einer an dem Achslenker befestigbaren Konsole (15) ausgebildet ist, **dadurch gekennzeichnet, dass** die Befestigung der Konsole (15) aufgeteilt ist auf mindestens eine Steck- oder Hakenverbindung (31) und mindestens eine hiervon beabstandete weitere Verbindung (32), vorzugsweise eine Schraub-, Bolzen oder Rastverbindung.

2. Anhebevorrichtung nach Anspruch 1, **dadurch gekennzeichnet, dass** das freie Ende der Druckübertragung (18, 20) durch eine Rolle (20) gebildet wird, und dass die Druckaufnahme (15A) in einer konkav und vorzugsweise evolventenförmig gestalteten Randkontur der Konsole (15) besteht.

3. Anhebevorrichtung nach Anspruch 1 oder 2, **gekennzeichnet durch** eine Ausbildung der Steck- oder Hakenverbindung (31) dergestalt, dass diese **durch** eine von der weiteren Verbindung (32) weggerichtete Bewegung der Konsole (15) in Eingriff gelangt.

4. Anhebevorrichtung nach einem der Ansprüche 1 bis 3 **dadurch gekennzeichnet, dass** die Konsole (15) in zwei oder mehr unterschiedlichen Positionen zu dem Achslenker einstellbar ist.

5. Anhebevorrichtung nach Anspruch 4, **dadurch gekennzeichnet, dass** sich die Konsole (15) zusammensetzt aus
- einem Verstellelement (52), an dem die Druckaufnahme (15A) und an dem zwei oder mehr Arretierstrukturen (53A) ausgebildet sind, wobei die Arretierstrukturen (53A) jeweils an einem achslenkerseitigen Element (34) einer Steck- oder Hakenverbindung (31) arretierbar sind,
- einem weiteren Konsolenelement (51), welches durch eine weitere Verbindung (32) mit dem Achslenker verbunden und gegen das Verstellelement (52) auf dessen den Arretierstrukturen (53A) abgewandter Seite abgestützt ist.

6. Anhebevorrichtung nach einem der Ansprüche 1, 2 oder 5, **dadurch gekennzeichnet, dass** die weitere Verbindung (32) eine Schraubverbindung mit einer Schraube (41) ist, deren Schraubenkopf (42) gegen die Konsole (15) anliegt, und deren Gewindeende in eine außen konische Spreizmutter (39) eingreift, die in einer die Schraube (41) umgebenden, längsgeschlitzten Zentrierhülse (37) sitzt.

7. Anhebevorrichtung nach Anspruch 6, **dadurch gekennzeichnet, dass** um die Schraube (41) herum der Achslenker (5) und die Konsole (15) jeweils mit einer Ringfläche (47, 46) versehen sind, und dass die Ringflächen (47, 46) flächig gegeneinander anliegen.

8. Achslenker (5) für eine bei Nichtgebrauch mittels eines Achslifts anhebbare Fahrzeugachse, wobei Bestandteil des Achslifts achslenkerseitig eine Druckaufnahme zur Anlage eines Kraftglieds des Achslifts ist, wobei an dem Achslenker (5) Befestigungsmittel (31, 32) zur Befestigung einer die Druckaufnahme aufweisenden Konsole ausgebildet sind **dadurch gekennzeichnet, dass** sich die Befestigungsmittel aufteilen auf mindestens eine Steck- oder Hakenverbindung (31), und mindestens eine hiervon beabstandete weitere Verbindung (32), wobei die weitere Verbindung eine Schraub-, Bolzen oder Rastverbindung ist.

9. Achslenker nach Anspruch 8, **gekennzeichnet durch** eine Ausbildung des achslenkerseitigen Elements der Steck- oder Hakenverbindung (31) dergestalt, dass die Konsole **durch** eine von der weiteren Verbindung (32) weggerichtete Bewegung in Formschluss mit der Steck- oder Hakenverbindung (31) gelangt

10. Achslenker nach Anspruch 8 oder 9, **dadurch gekennzeichnet, dass** das achslenkerseitige Element der Steck- oder Hakenverbindung (31) ein Haken (34) ist, dessen Hakenende zu der weiteren Verbindung (32) hin weist.

11. Achslenker nach einem der Ansprüche 8 bis 10, **dadurch gekennzeichnet, dass** das achslenkerseitige Element der weiteren Verbindung (32) eine quer zur Längserstreckung des Achslenkers angeordnete Bohrung (36) des Achslenkers ist.

12. Achslenker nach Anspruch 11, **dadurch gekennzeichnet, dass** die Bohrung (36) in einen Hohlraum (29) des Achslenkers mündet.

13. Achslenker nach Anspruch 11 oder 12 **dadurch gekennzeichnet, dass**, zur Abstützung der Konsole, das nach außen mündende Ende der Bohrung (36) von einer Ringfläche (46) umgeben ist.

## Claims

1. A lifting apparatus for an axle guide carrying a vehicle axle, with a power member (11) arranged fixed with the vehicle, a one-piece or multiple-piece pressure transmission means (18, 20) movable in the direction towards the axle guide by actuation of the power member (11), and a pressure absorption means (15A) which is arranged on the axle guide as a continuation of the operative direction of the power member (11) and the pressure transmission means (18, 20) and against which the pressure transmission means (18, 20) comes to rest only when the power member (11) is actuated, wherein the pressure absorption means (15A) is formed on a bracket (15) capable of being fastened to the axle guide, **characterized in that** the fastening of the bracket (15) is divided into at least one plug-in or hook connection (31) and at least one further connection (32) arranged at a distance therefrom, preferably a bolt, pin or catch connection.

2. A lifting apparatus according to Claim 1, **characterized in that** the free end of the pressure transmission means (18, 20) is formed by a roller (20), and the pressure absorption means (15A) consists in an edge contour of the bracket (15) of a concave and preferably involute shape.

3. A lifting apparatus according to Claim 1 or 2, **characterized by** a design of the plug-in or hook connection (31) such that the latter engages by a movement of the bracket (15) directed away from the further connection (32).

4. A lifting apparatus according to any one of Claims 1 to 3, **characterized in that** the bracket (15) is capable of being set in two or more different positions with respect to the axle guide.

5. A lifting apparatus according to Claim 4, **characterized in that** the bracket (15) is formed from
- an adjustment element (52) on which the pressure absorption means (15A) and two or more locking structures (53A) are formed, wherein the locking structures (53A) are capable of being locked in each case on an element (34) of a plug-in or hook connection (31) towards the axle guide,
- a further bracket element (15) which is connected to the axle guide by a further connection (32) and which is supported against the adjustment element (52) on the side thereof facing away from the locking structures (53A).

6. A lifting apparatus according to any one of Claims 1, 2 or 5, **characterized in that** the further connection (32) is a bolt connection with a bolt (41), the head (42) of which rests against the bracket (15) and the threaded end of which engages in an expanding nut (30) which is conical on the outside and which is mounted in a longitudinally slotted centring sleeve (37) surrounding the bolt (41).

7. A lifting apparatus according to Claim 6, **characterized in that** the axle guide (5) and the bracket (15) are provided in each case with an annular face (47, 46) around the bolt (41), and the annular faces (47, 46) rest flat against each other.

8. An axle guide (5) for a vehicle axle capable of being lifted by means of an axle lift when not in use, wherein a pressure absorption means for the abutment of a power member of the axle lift is a component part of the axle lift on the side towards the axle guide, wherein fastening means (31, 32) for fastening a bracket comprising the pressure absorption means is formed on the axle guide (5), **characterized in that** the fastening means are divided into at least one plug-in or hook connection (31) and at least one further connection (32) arranged at a distance therefrom, wherein the further connection is a bolt, pin or catch connection.

9. An axle guide according to Claim 8, **characterized by** a design of the element of the plug-in or hook connection (31) on the side towards the axle guide such that the bracket comes into positive locking with the plug-in or hook connection (31) by a movement directed away from the further connection (32).

10. An axle guide according to Claim 8 or 9, **characterized in that** the element of the plug-in or hook connection (31) on the side towards the axle guide is a hook (34), the end of which is directed towards the further connection (32).

11. An axle guide according to any one of Claims 8 to 10, **characterized in that** the element of the further connection (32) on the side towards the axle guide is a bore (36) in the axle guide situated transversely to the longitudinal extension of the axle guide.

12. An axle guide according to Claim 11, **characterized in that** the bore (36) opens into a cavity (29) in the axle guide.

13. An axle guide according to Claim 11 or 12, **characterized in that** the end of the bore (36) opening towards the outside is surrounded by an annular face (46) in order to support the bracket.

## Revendications

1. Dispositif de levage pour un guide d'essieu supportant un essieu de véhicule automobile, comprenant un organe de force (11) agencé en position fixe sur le véhicule, un échangeur de pression (18, 20) composé d'une ou plusieurs pièces, pouvant être déplacé dans la direction du guide d'essieu par l'actionnement de l'organe de force (11), ainsi qu'un absorbeur de pression (15A) agencé sur le guide d'essieu dans le prolongement de la direction de fonctionnement de l'organe de force (11) et de l'échangeur de pression (18, 20), contre lequel l'échangeur de pression (18, 20) prend uniquement appui lorsque l'organe de force (11) est actionné, étant entendu que l'absorbeur de pression (15A) est réalisé sur une console (15) pouvant être fixée sur le guide d'essieu, **caractérisé en ce que** la fixation de la console (15) est divisée en au moins un connecteur à fiche ou à crochet (31) et au moins un autre connecteur (32) situé à distance de celui-ci, de préférence un connecteur à vis, à boulon ou à encliquetage.

2. Dispositif de levage selon la revendication 1, **caractérisé en ce que** l'extrémité libre de l'échangeur de pression (18, 20) est formée par une poulie (20) et **en ce que** l'absorbeur de pression (15A) consiste dans un contour du bord de la console (15) concave, et de préférence, réalisé dans une forme en développante.

3. Dispositif de levage selon la revendication 1 ou 2, **caractérisé en ce que** le connecteur à fiche ou à crochet (31) est réalisé de telle sorte qu'il est mis en prise par un déplacement de la console (15) dans la direction opposée à l'autre connecteur (32).

4. Dispositif de levage selon l'une des revendications 1 à 3, **caractérisé en ce que** la console (15) peut être réglée dans deux positions différentes ou davantage par rapport au guide d'essieu.

5. Dispositif de levage selon la revendication 4, **caractérisé en ce que** la console (15) est constituée :
- d'un élément de réglage (52) sur lequel sont réalisés l'absorbeur de pression (15A) et deux structures d'arrêt (53A) ou davantage, étant entendu que les structures d'arrêt (53A) peuvent chacune être bloquées au niveau d'un élément (34) situé du côté du guide d'essieu d'un connecteur à fiche ou à crochet (31) ;
- d'un élément de console supplémentaire (51) qui est relié au guide d'essieu au moyen d'un autre connecteur (32) et qui prend appui contre l'élément de réglage (52) sur son côté opposé aux structures d'arrêt (53A).

6. Dispositif de levage selon l'une des revendications 1, 2 ou 5, **caractérisé en ce que** l'autre connecteur (32) est un connecteur vissé comprenant une vis (41), dont la tête de vis (42) repose contre la console (15) et dont l'extrémité du filetage s'engage dans un écrou d'écartement (39) de forme extérieure conique, qui est logé dans une douille de centrage à fente longitudinale (37) qui entoure la vis (41).

7. Dispositif de levage selon la revendication 6, **caractérisé en ce qu'**autour de la vis (41), le guide d'essieu (5) et la console (15) sont respectivement dotés d'une surface annulaire (47, 46) et **en ce que** les surfaces annulaires (47, 46) reposent à plat l'une contre l'autre.

8. Guide d'essieu (5) pour un essieu de véhicule automobile pouvant être levé au moyen d'un lève-essieu lorsqu'il n'est pas utilisé, étant entendu qu'un absorbeur de pression destiné à recevoir un organe de force du lève-essieu fait partie intégrante du lève-essieu du côté du guide d'essieu, étant entendu que des moyens de fixation (31, 32) sont réalisés sur le guide d'essieu (5) en vue de la fixation d'une console présentant l'absorbeur de pression, **caractérisé en ce que** les moyens de fixation sont divisés en au moins un connecteur à fiche ou à crochet (31) et au moins un autre connecteur (32) situé à distance de celui-ci, étant entendu que l'autre connecteur est un connecteur à vis, à boulon ou à encliquetage.

9. Guide d'essieu selon la revendication 8, **caractérisé en ce que** l'élément du connecteur à fiche ou à crochet (31) du côté du guide d'essieu est réalisé de telle sorte que la console est mise en liaison mécanique avec le connecteur à fiche ou à crochet (31) par un déplacement dans la direction opposée à l'autre connecteur (32).

10. Guide d'essieu selon la revendication 8 ou 9, **caractérisé en ce que** l'élément du connecteur à fiche ou à crochet (31) du côté du guide d'essieu est un crochet (34), dont l'extrémité du crochet est dirigée vers l'autre connecteur (32).

11. Guide d'essieu selon l'une des revendications 8 à 10, **caractérisé en ce que** l'élément de l'autre connecteur (32) du côté du guide d'essieu est un moyeu (36) du guide d'essieu agencé transversalement par rapport au sens longitudinal du guide d'essieu.

12. Guide d'essieu selon la revendication 11, **caractérisé en ce que** le moyeu (36) débouche dans un espace creux (29) du guide d'essieu.

13. Guide d'essieu selon la revendication 11 ou 12, **caractérisé en ce qu'**en vue de soutenir la console, l'extrémité du moyeu (36) débouchant vers l'extérieur est entourée par une surface annulaire (46).
